# EUROPÄISCHE PATENTANMELDUNG

(11) **EP 1 478 100 A1**
(43) Veröffentlichungstag der Anmeldung: **17.11.2004**
(21) Anmeldenummer: 03011251.0
(22) Anmeldetag: 16.05.2003
(51) Int. Cl.: H04B 3/04, H04L 25/02, H04B 3/20

(54) **Vorrichtung und Verfahren zur aktiven Kompensation von Netzsignalverzerrungen**

(71) Anmelder: SIEMENS AKTIENGESELLSCHAFT, 80333 München (DE)
(72) Erfinder: Schiff, Andreas, Dr., 88097 Eriskirch (DE); Wiesgickl, Bernhard, 92249 Vilseck (DE)

(57) **Zusammenfassung**

Netze, insbesondere AS-i-Netze, sollen mit längeren Busleitungen ausgestattet werden können, ohne dass Repeater eingesetzt werden müssen. Hierzu wird in ein Netz eine Kompensationsschaltung eingebaut, die Reflexionen am nicht abgeschlossenen Ende der Busleitung kompensieren kann. Eine derartige Kompensationsschaltung besteht beispielsweise aus einer Sample and Hold-Schaltung (S+H), die aus der Busleitung (B) Signale entnimmt und an Speicherzellen (z⁻¹) für Signalverzögerung weiterleitet. Abhängig von der Adresse einer Netzwerkkomponente wird durch einen Wählschalter (W) die entsprechende Zeitverzögerung gewählt. Das Kompensationssignal wird dann über einen Multiplikator (M) und einen Addierer (A) in die Busleitung (B) zurückgekoppelt. Das Signal wird somit abhängig von der Empfängeradresse entzerrt.

## Beschreibung

Die vorliegende Erfindung betrifft eine Kompensationsschaltung zur aktiven Kompensation von Netzsignalverzerrungen in einem Netzwerk, insbesondere einem AS-Interface-Netz. Ferner betrifft die vorliegende Erfindung ein entsprechendes Verfahren zur aktiven Kompensation.

AS-Interface-Netze werden insbesondere im Anlagenbau, in der Fördertechnik und in der Gebäudetechnik zur Kommunikation mehrerer Netzkomponenten beziehungsweise Slaves untereinander verwendet. AS-Interface-Netze (Aktuator-Sensor-Interface) sind auf eine maximale Ausdehnung von etwas mehr als 100 m begrenzt, wenn keine Repeater eingesetzt werden sollen. Die Repeater haben den Nachteil, dass sie ein eigenes Netzteil benötigen, da die Leitungsabschnitte vor und nach einem Repeater galvanisch voneinander getrennt sind.

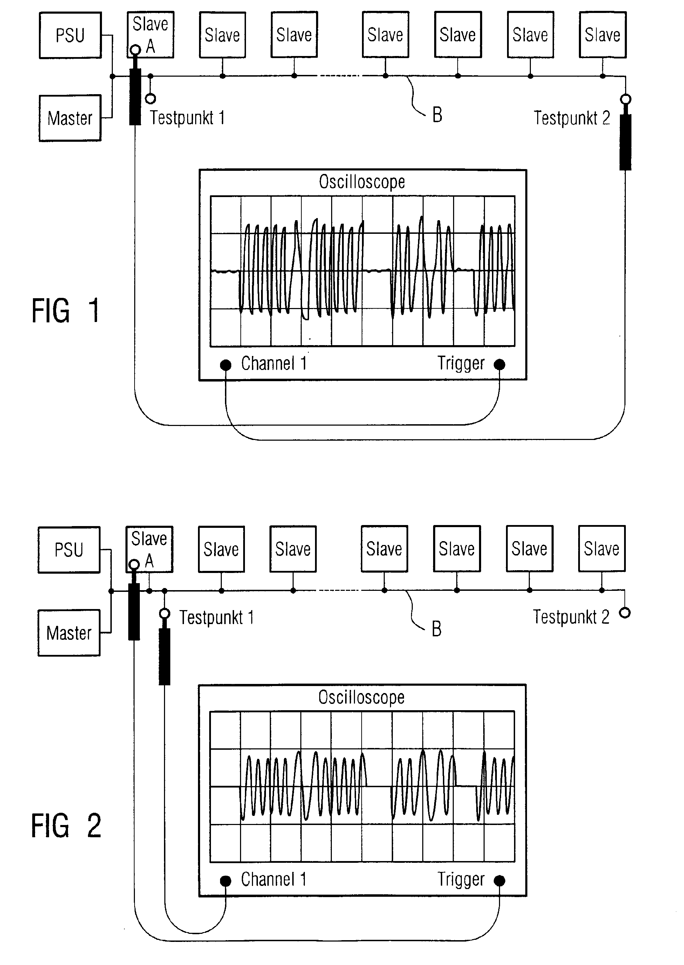

Ein AS-Interface-Netz ist in FIG 1 skizzenhaft dargestellt. An die Busleitung B sind mehrere Netzwerkkomponenten beziehungsweise Slaves angeschlossen. Am Anfang der Busleitung B sind ein Master und ein Netzteil (PSU) für das Netzwerk angeordnet. Der in der Nähe des Masters liegende Slave ist als "Slave A" bezeichnet. Netzwerkabgriffe zum Messen der Signale (Testpunkt 1 und Testpunkt 2) sind am Beginn und am Ende der Busleitung B angeordnet.

Wie oben erwähnt, sind derartige Netze auf Busleitungen von ca. 100 m begrenzt. Ursache hierfür ist die Verzerrung des Übertragungssignals durch Reflexionen am nicht abgeschlossenen Ende der Leitung in der Nähe des Testpunkts 2. Betroffen von diesem Effekt sind demnach hauptsächlich die Übertragungssignale der Teilnehmer beziehungsweise Netzwerkkomponenten, die am weitesten entfernt vom nicht abgeschlossenen Ende der Leitung angeordnet sind. Der Grad der resultierten Verzerrung ist also abhängig von der Position des Teilnehmers im AS-i-Netz.

In FIG 1 ist die Signalform eines Masteraufrufs und einer Slaveantwort in einem Oszilloskopbild unter der Busleitung B dargestellt. Zur Triggerung dient das Signal des Slave A. Das Messsignal wird am Testpunkt 2, d. h. am nicht abgeschlossenen Ende der Leitung abgenommen. Das Oszilloskopbild zeigt in der linken Hälfte den Masteraufruf und nach einer kurzen Pause daran anschließend die Slaveantwort gefolgt von einer weiteren kurzen Pause. Es ist ersichtlich, dass die beiden Signale nahezu unverzerrt am Testpunkt ankommen.

Wird das Signal gemäß FIG 2 am Testpunkt 1, d. h. nahe am Master beziehungsweise Slave A, die sich beide am abgeschlossenen Ende der Leitung B befinden, abgenommen, so sind sowohl im Mastersignal als auch im Slavesignal deutliche Verzerrungen auf dem Oszilloskopbild zu erkennen. Die Verzerrungen rühren von den Reflexionen am nicht abgeschlossenen Ende der Busleitung B.

Die Aufgabe der vorliegenden Erfindung besteht somit darin, ein Netzwerk mit längerer Busleitung zur Verfügung stellen zu können.

Erfindungsgemäß wird diese Aufgabe gelöst durch eine Kompensationsschaltung zur aktiven Kompensation von Netzsignalverzerrungen in einem Netzwerk mit einer Kompensationssignalerzeugungseinrichtung zum Erzeugen und/oder Bereitstellen eines Kompensationssignals und einer Einspeiseinrichtung, die mit der Kompensationssignalerzeugungseinrichtung verbunden ist, zum Einspeisen des Kompensationssignals in ein Netzwerk.

Erfindungsgemäß ist ebenso vorgesehen ein Verfahren zur aktiven Kompensation von Netzsignalverzerrungen in einem Netzwerk durch Erzeugen und/oder Bereitstellen eines Kompensationssignals und Einspeisen des Kompensationssignals in das Netzwerk bei der Übertragung eines verzerrten Nutzsignals.

Der Erfindung liegt damit der Gedanke zugrunde, den Reflexionen am nicht abgeschlossenen Ende der Leitung durch aktive Kompensation zu begegnen. Damit ist es möglich, eine größere Ausdehnung von AS-i-Netzen ohne Repeatern und dazugehörige AS-i-Netzteile zu erreichen.

Generell wird durch die Kompensation die Signalqualität verbessert und damit die Rate der nicht verstandenen AS-i-Nachrichten reduziert. Durch die Kompensation wird ferner eine Unabhängigkeit von der Topologie des Netzes erreicht und die Übertragungsgeschwindigkeit im AS-i-Netz kann beibehalten werden. In bereits bestehende Netze kann die erfindungsgemäße Kompensationsschaltung nachträglich eingebaut werden.

Das zu verwendende Kompensationssignal kann vorbestimmt und so gewählt sein, dass es einen Zwischenwert zwischen einem maximalen Kompensationssignal zur Kompensation einer maximalen Verzerrung und einem Nullsignal darstellt. Günstigerweise wird ein Mittelwert zwischen maximaler Kompensation und keiner Kompensation gewählt.

Darüber hinaus kann das Kompensationssignal durch Simulation erzeugt werden. Dadurch kann auf eine Rückkopplung der Netzwerksignale verzichtet werden.

Vorzugsweise wird das Kompensationssignal in Abhängigkeit einer Netzwerkkomponentenadresse erzeugt. Da der Ort der jeweiligen Netzwerkkomponente bekannt ist, kann die exakte Länge der Busleitung berücksichtigt werden.

Es kann eine spezielle Auswerteeinrichtung zum Auswerten eines Signals einer sendenden Komponente hinsichtlich einer Empfangsadresse und zum Ansteuern der Komponentensignalerzeugungseinrichtung mit der Empfangsadresse als Netzwerkkomponentenadresse zur automatischen Erzeugung eines Kompensationssignals in der Kompensationsschaltung vorgesehen sein. Anhand der gewonnenen Empfänger- beziehungsweise Netzwerkkomponentenadresse kann wiederum das optimale Kompensationssignal ermittelt werden.

Das optimale Kompensationssignal kann ferner mit Hilfe einer Recheneinrichtung anhand des Kommunikationsverhaltens einer der Komponenten des Netzwerks erlernt werden. So kann beispielsweise die Güte eines Signals als ausreichend angesehen werden, wenn es vom Empfänger "verstanden" wird.

Ein optimales Kompensationssignal kann aber auch mit Hilfe der Recheneinrichtung anhand eines Analyseresultats eines ausgewählten Abschnitts des auszuwertenden Signals ermittelt werden. Damit kann beispielsweise eine Überkompensation verhindert werden.

In der Kompensationsschaltung kann mindestens eine bekannte Größe eines Merkmals eines unverzerrten Signals mit der Größe dieses Merkmals des verzerrten Signals verglichen und das Vergleichsergebnis zur Erzeugung des Kompensationssignals herangezogen werden. Dadurch kann beispielsweise auf Grund einer Abweichung von der beim Empfänger zu erwartenden Impulsbreite eine Kompensation des verzerrten Signals vorgenommen werden.

Die erfindungsgemäße Kompensationsschaltung ist vorzugsweise in der Nähe des Netzteils eines Netzwerks angeordnet. Damit ist die Signalerzeugung und die Kompensation von Reflexionssignalen örtlich zusammengelegt und einfacher zu handhaben. Günstigerweise wird die Kompensationsschaltung direkt in das Netzteil integriert.

Die vorliegende Erfindung wird nun anhand der beigefügten Zeichnungen näher erläutert, in denen zeigen:
- FIG 1: eine Skizze eines Netzwerks und das Messsignal an einem ersten Messpunkt;
- FIG 2: die Skizze des Netzwerks und ein Messsignal an einem zweiten Messpunkt;
- FIG 3: ein Schaltbild einer erfindungsgemäßen Kompensationsschaltung;
- FIG 4: ein Simulationssignal am nicht abgeschlossenen Ende eines Netzes;
- FIG 5: ein Simulationsmodell für das Signal von FIG 4;
- FIG 6: ein Simulationssignal für das abgeschlossene Ende des Netzes mit Reflexion;
- FIG 7: ein Simulationsmodell für das Signal von FIG 6; und
- FIG 8: ein Signal mit erfindungsgemäßer Kompensation.

Die nachfolgend beschriebenen Ausführungsbeispiele stellen bevorzugte Ausführungsformen der vorliegenden Erfindung dar.

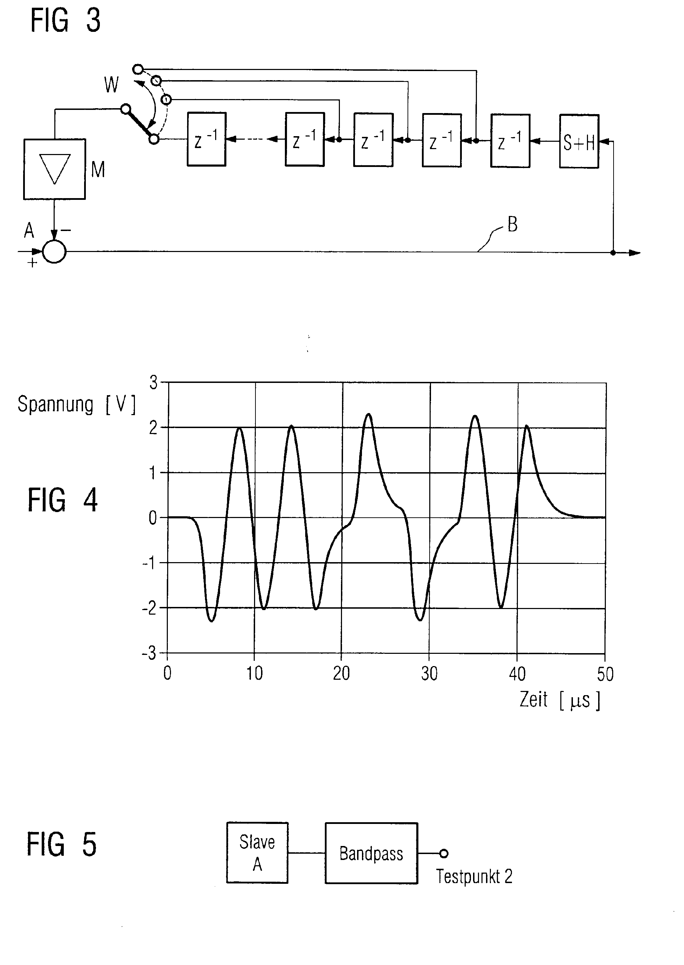

Die Reflexionen am nicht abgeschlossenen Ende einer Busleitung sollen aktiv kompensiert werden. Hierzu ist erfindungsgemäß eine Kompensationsschaltung vorgesehen, von der eine Ausführungsform in FIG 3 dargestellt ist. Eine Sample and Hold-Schaltung S+H tastet die Spannung auf der AS-i-Leitung beziehungsweise Busleitung B in regelmäßigen Intervallen ab und speichert die Abtastergebnisse. Mehrere in Reihe geschaltete Speicherzellen z⁻¹ sind an die Sample and Hold-Schaltung S+H angeschlossen. Die abgetasteten Spannungen werden von den Speicherzellen z⁻¹ in regelmäßigen Intervallen an die jeweils nächsten Zellen weitergegeben. Hinter jeder Speicherzelle z⁻¹ besteht eine Leitung zu einem Wählschalter W. Der Wählschalter W ist weiterhin mit einem Multiplizierer M verbunden, der mittels eines Addierers A ein Kompensationssignal in die Busleitung rückkoppelt.

Mit Hilfe des Wählschalters W wird eine der Speicherzellen z⁻¹ für die Weiterverarbeitung des Signals ausgewählt, wobei die Auswahl von der Leitungslänge vom Sender zum Empfänger in dem AS-i-Netz abhängt. Mit dem Multiplizierer M kann die in der ausgewählten Speicherzelle z⁻¹ gespeichert Spannung mit einem Faktor f multipliziert werden. Der Faktor f hängt von den Dämpfungsverhältnissen im AS-i-Netz ab und wird typischerweise aus dem Bereich -1 < f < 1 ausgewählt. Mit dem Addierer wird schließlich die mit dem ausgewählten Faktor f multiplizierte Spannung zu der aktuell im AS-i-Netz vorhandenen Spannung vorzeichenrichtig hinzuaddiert.

Die Kompensationsschaltung kann grundsätzlich an jedem beliebigen Ort in dem Netz angeordnet sein. Üblicherweise wird sie jedoch in der Nähe des Masters beziehungsweise AS-i-Netzteils PSU angeordnet (vergleiche FIG 1 und FIG 2). Der Grund hierfür liegt darin, dass diese Komponenten einen Leitungsabschluss darstellen, an dem keine Reflexionen stattfinden. Die Kompensationsschaltung kann auch unmittelbar in das Netzteil integriert werden.

Anhand der folgenden Figuren 4 bis 8 wird nun die Wirkungsweise der erfindungsgemäßen Kompensationsschaltung an dem Beispiel eines 200 m langen AS-i-Netzes veranschaulicht. Ziel ist es, das durch Reflexion verzerrte Signal mit Hilfe der Kompensation weitgehend zu rekonstruieren, so dass es der Empfänger wieder auswerten kann.

In FIG 4 ist die Simulation eines typischen Slavesignals in dem 200 m langen AS-i-Netz ohne Kompensation dargestellt. Am Testpunkt 2 wird das Slavesignal des Slave A (vergleiche FIG 1) abgegriffen. Das Signal ist nicht durch Reflexion verzerrt und kann von einem Slave, der sich in der Nähe des Testpunkts 2 befindet, gut ausgewertet werden.

Das in FIG 4 dargestellte Signal kann durch das Simulationsmodell von FIG 5 erhalten werden. Dabei wird die Busleitung im Wesentlichen durch einen Bandpass repräsentiert. Die Signalverzögerung ist hier vernachlässigbar, so dass in dem Simulationsmodell auf ein Verzögerungselement verzichtet werden kann.

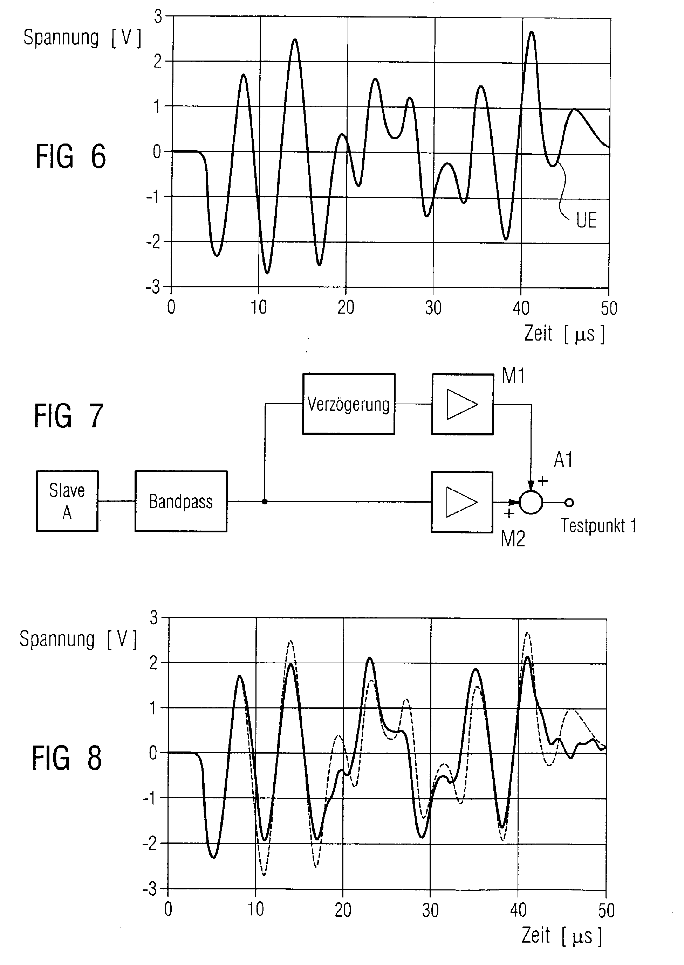

In FIG 6 ist ein Slavesignal wiedergegeben, das der Slave A absendet und ein Slave in der Nähe des Testpunkts 1 oder der Master am abgeschlossenen Ende des Netzes empfängt. Das Signal ist durch Reflexion am nicht abgeschlossenen Ende der Leitung stark verzerrt und vom Empfänger nicht auswertbar.

Bei dem in FIG 6 dargestellten Signal handelt es sich ebenfalls um ein simuliertes Signal. Das entsprechende Simulationsmodell ist in FIG 7 wiedergegeben. Der Slave A sendet sein Signal über die Busleitung, die mit dem Bandpass wie in FIG 5 repräsentiert wird, zum Testpunkt 1. Durch die Reflexion am offenen Ende der Leitung wird zum direkten Signal ein Reflexionsanteil zeitversetzt addiert. Dies wird im Simulationsmodell dadurch umgesetzt, dass der Signalpfad aufgespalten wird und ein Teil des Signals durch ein Verzögerungsglied zeitlich verzögert wird. Der direkte Anteil und der Reflexionsanteil werden in Multiplizierern M1 und M2 mit geeigneten Faktoren multipliziert, und die multiplizierten Signale werden in einem anschließenden Addierer A1 zu einem Gesamtsignal addiert.

Um nun das Signal von FIG 6 auswertbar zu machen, ist die erfindungsgemäße Kompensation notwendig. Durch das Zuschalten der Kompensationsschaltung von FIG 3 in das 200 m lange AS-i-Netz können die Verzerrungen, die durch die Reflexion entstanden sind, kompensiert werden, wie dies in FIG 8 anhand einer Simulation dargestellt ist. Das verzerrte Signal von FIG 6 ist in FIG 8 gestrichelt wiedergegeben. Das entzerrte Signal kommt dem nicht verzerrten Signal von FIG 4 sehr ähnlich und ist damit ebenfalls gut auswertbar.

Die Kompensation kann auf unterschiedliche Art und Weise erfolgen. In einer einfachen Ausführungsform der Kompensationsschaltung werden alle auf der Busleitung B übertragenen Signale mit einem einzigen vorbestimmten Kompensationssignal beaufschlagt, das einen sinnvollen Kompromiss zwischen maximaler Kompensation eines stark verzerrten Signals und Überkompensation eines nicht verzerrten Signals darstellt.

Bei einer alternativen Ausführungsform der Kompensationsschaltung wird der Eingriff der Kompensation von der Slaveadresse abhängig gemacht. Gemäß dem Schaltbild von FIG 3 wird der Wählschalter W in Abhängigkeit von der Slaveadresse positioniert. Dadurch können Slavesignale mit maximaler Verzerrung optimal kompensiert werden. Ebenso können Slavesignale ohne Verzerrung durch die Kompensationsschaltung unverändert bleiben, wenn der Wählschalter W in eine in FIG 3 nicht dargestellte offene Position geschaltet oder der Faktor des Multiplizierers M auf 0 gesetzt wird. Der Grad der Kompensation wird also auf diese Weise von der Position des Teilnehmers im Netzwerk abhängig gemacht.

Bei einer weiteren Ausführungsform der vorliegenden Erfindung wird der Grad der Kompensation automatisch gewählt. Die automatische Kompensation erfolgt bei einer typischen Kommunikation, bei der ein Slave auf die Anfrage eines Masters antwortet, in mehreren Schritten. In einem ersten Schritt wird nur das Signal des Masters von seinen Verzerrungen befreit. Hierzu wird das Mastersignal hinsichtlich einer beziehungsweise mehrerer Slaveadressen ausgewertet. Die Kompensation des Mastersignals erfolgt in Abhängigkeit von der Leitungslänge zu den angesprochenen Slaves.

In einem zweiten Schritt der automatischen Kompensation wird dann entsprechend für jeden Slave die optimale Kompensation der Slaveantwort ermittelt. Als Kriterium für die Güte der Kompensation kann die Tatsache herangezogen werden, dass der Empfänger das AS-i-Signal auswerten kann. Dies bedeutet, dass die Kompensation dann als ausreichend angesehen wird, wenn der Empfänger das Antwortsignal nach einer festgelegten Anzahl an Wiederholungen, vorzugsweise beim ersten Mal, "versteht".

Als ein weiteres Gütekriterium für die Kompensation kann der Analysewert von einem Signalabschnitt verwendet werden. Beispielsweise kann die Amplitude des in FIG 6 dargestellten Überschwingers UE am Ende des Slavepulses herangezogen werden. Je niedriger diese Amplitude ist, desto besser ist die Kompensation. Im Idealfall ist sie 0 und es wird eine Abklingkurve wie in FIG 4 am Ende des Slavepulses erreicht. Die optimale Kompensation kann beispielsweise durch einen iterativen Lernprozess gefunden werden.

In variablen Netzen, also Netzen, deren Länge sich während des Betriebs verändert, kann die Kompensation auch laufend adaptiv nachgeführt werden. Dies kann sich beispielsweise beim Anschluss von Slaves über Stromschienen als günstig erweisen.

In einer alternativen oder ergänzenden Ausgestaltung der Kompensationsschaltung kann sich diese die a priori bekannten Eigenschaften des AS-i-Telegrammaufbaus zunutze machen, um ein verzerrtes Telegramm durch aktive Beeinflussung wieder zu entzerren. Ein AS-i-Telegramm ist in den meisten Eigenschaften vorbestimmt und damit bekannt. Dies gilt insbesondere hinsichtlich der Impulspolarität, der Impulsform, der Impulshöhe und der Impulsabfolge. Die Information steckt in der Impulsbreite. Wenn demzufolge die Kompensationsschaltung die gewollte Impulsbreite erkennt, dann kann das verzerrte Signal durch aktive Beeinflussung (Stromsenke, Stromquelle) entzerrt und für den Master und die anderen Slaves wieder "lesbar" gemacht werden.

## Patentansprüche

1. Kompensationsschaltung zur aktiven Kompensation von Netzsignalverzerrungen in einem Netzwerk mit
- einer Kompensationssignalerzeugungseinrichtung zum Erzeugen und/oder Bereitstellen eines Kompensationssignals und
- einer Einspeiseinrichtung (A), die mit der Kompensationssignalerzeugungseinrichtung verbunden ist, zum Einspeisen des Kompensationssignals in ein Netzwerk.

2. Kompensationsschaltung nach Anspruch 1, wobei das Kompensationssignal vorbestimmt ist und einen Zwischenwert zwischen einem maximalen Kompensationssignal zur Kompensation einer maximalen Verzerrung und einem Nullsignal darstellt.

3. Kompensationsschaltung nach Anspruch 1 oder 2, wobei das Kompensationssignal durch interne oder externe Simulation erzeugbar ist.

4. Kompensationsschaltung nach einem der vorhergehenden Ansprüche, wobei das Kompensationssignal in Abhängigkeit einer Netzwerkkomponentenadresse erzeugbar ist.

5. Kompensationsschaltung nach Anspruch 4, die eine Auswerteeinrichtung zum Auswerten eines Signals einer sendenden Komponente hinsichtlich einer Empfangsadresse und Ansteuern der Kompensationserzeugungseinrichtung mit der Empfangsadresse als Netzwerkkomponentenadresse zur automatischen Erzeugung eines Kompensationssignals aufweist.

6. Kompensationsschaltung nach Anspruch 5, die eine Recheneinrichtung zum Lernen eines Kompensationssignals anhand des Kommunikationsverhaltens einer der Komponenten (Slave, Master) des Netzwerks aufweist.

7. Kompensationsschaltung nach Anspruch 5 oder 6, die eine Recheneinrichtung zum Lernen eines Kompensationssignals anhand eines Analyseresultats eines ausgewählten Abschnitts (UE) des auszuwertenden Signals aufweist.

8. Kompensationsschaltung nach einem der vorhergehenden Ansprüche, wobei in der Kompensationssignalerzeugungseinrichtung mindestens eine bekannte Größe eines Merkmals eines unverzerrten Signals mit der Größe dieses Merkmals des verzerrten Signals vergleichbar und das Vergleichsergebnis zur Erzeugung des Kompensationssignals heranziehbar ist.

9. Netzwerk, insbesondere AS-i-Netzwerk, mit einer Kompensationsschaltung nach einem der vorhergehenden Ansprüche.

10. Netzwerk nach Anspruch 9, wobei die Kompensationsschaltung in der Nähe eines Netzteils (PSU) zur Versorgung des Netzwerks angeordnet ist.

11. Netzwerk nach Anspruch 9, wobei die Kompensationsschaltung in einem Netzteil (PSU) zur Versorgung des Netzwerks integriert ist.

12. Verfahren zur aktiven Kompensation von Netzsignalverzerrungen in einem Netzwerk durch
- Erzeugen und/oder Bereitstellen eines Kompensationssignals und
- Einspeisen des Kompensationssignals in das Netzwerk bei der Übertragung eines verzerrten Nutzsignals.

13. Verfahren nach Anspruch 12, wobei das Kompensationssignal vorab bestimmt wird und einen Zwischenwert zwischen einem maximalen Kompensationssignal zur Kompensation einer maximalen Verzerrung und einem Nullsignal darstellt.

14. Verfahren nach Anspruch 12 oder 13, wobei das Kompensationssignal durch Simulation erzeugt wird.

15. Verfahren nach einem der Ansprüche 12 bis 14, wobei das Kompensationssignal in Abhängigkeit einer Netzwerkkomponentenadresse erzeugt wird.

16. Verfahren nach Anspruch 15, wobei ein Signal einer sendenden Komponente des Netzwerks hinsichtlich einer Empfangsadresse ausgewertet und das Kompensationssignal anhand der Empfangsadresse erzeugt und/oder bereitgestellt wird.

17. Verfahren nach Anspruch 16, wobei das Kompensationssignal anhand eines Kommunikationsverhaltens einer der Komponenten (Slave, Master) des Netzwerks gelernt wird.

18. Verfahren nach Anspruch 16 oder 17, wobei das Kompensationssignal anhand eines Analyseresultats eines ausgewählten Abschnitts (UE) des auszuwertenden Signals gelernt wird.

19. Verfahren nach einem der Ansprüche 12 bis 18, wobei mindestens eine bekannte Größe eines Merkmals eines unverzerrten Signals mit der Größe dieses Merkmals des verzerrten Signals verglichen und das Vergleichsergebnis zur Erzeugung des Kompensationssignals herangezogen wird.
